(19) 

**Europäisches Patentamt**
**European Patent Office**
**Office européen des brevets**

(11) **EP 4 239 280 B1**

(12) # EUROPEAN PATENT SPECIFICATION

<table>
<tr><td>

(45) Date of publication and mention
of the grant of the patent:
**04.06.2025 Bulletin 2025/23**

(21) Application number: **22160237.8**

(22) Date of filing: **04.03.2022**

</td><td>

(51) International Patent Classification (IPC):
***G01B 9/02055*** (2022.01)

(52) Cooperative Patent Classification (CPC):
**G01B 9/02075**

</td></tr>
</table>

(54) **PHASE NOISE MITIGATION IN PHOTODETECTION CHAINS WITH AN OPTICAL PILOT TONE**

PHASENRAUSCHUNTERDRÜCKUNG IN PHOTODETEKTIONSKETTEN MIT OPTISCHEM PILOTTON

ATTÉNUATION DE BRUIT DE PHASE DANS DES CHAÎNES DE PHOTODÉTECTION AVEC UNE TONALITÉ PILOTE OPTIQUE

<table>
<tr><td>

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.09.2023 Bulletin 2023/36**

(73) Proprietor: **Airbus Defence and Space GmbH
82024 Taufkirchen (DE)**

(72) Inventors:
• **SCHULTZE, Alexander
82024 Taufkirchen (DE)**
• **SELL, Alexander
82024 Taufkirchen (DE)**

(74) Representative: **LKGLOBAL
Lorenz & Kopf Patentanwalt
Attorney at Law PartG mbB
Brienner Straße 11
80333 München (DE)**

(56) References cited:

</td><td>

• **BARK SIMON: "Inter-Spacecraft Frequency Distribution", 31 December 2015 (2015-12-31), XP055940069, Retrieved from the Internet <URL:https://www.researchgate.net/profile/ Simon-Barke/publication/ 275715426_Inter-Spacecraft_Frequency_Distri bution_for_Future_Gravitational_Wave_Observa tories/links/554500c90cf234bdb21d4f9d/ Inter-Spacecraft-Frequency-Distribution-for-Fu ture-Gravitational-Wave-Observatories.pdf> [retrieved on 20220707], DOI: http://dx.doi.org/ 10.13140/RG.2.1.1504.9125**
• **SCHINDLER P C ET AL: "Ultra-Dense, Single-Wavelength DFT-Spread OFDMA PON With Laserless 1.2 Gb/s ONU Ready for Silicon Photonics Integration", JOURNAL OF LIGHTWAVE TECHNOLOGY, IEEE, USA, vol. 33, no. 8, 15 April 2015 (2015-04-15), pages 1650 - 1659, XP011575124, ISSN: 0733-8724, [retrieved on 20150309], DOI: 10.1109/JLT.2014.2386215**

</td></tr>
</table>

• **LIANG YU-RONG ET AL: "Experimental scheme and noise analysis of weak-light phase locked loop for large-scale intersatellite laser interferometer", REVIEW OF SCIENTIFIC INSTRUMENTS, AMERICAN INSTITUTE OF PHYSICS, 2 HUNTINGTON QUADRANGLE, MELVILLE, NY 11747, vol. 92, no. 12, 9 December 2021 (2021-12-09), XP012261930, ISSN: 0034-6748, [retrieved on 20211209], DOI: 10.1063/ 5.0058659**

## Description

Technical Field

The description generally relates to optical arrangements and optical signal transmission and processing. In particular, the description relates to an optical arrangement and a method for operating an optical arrangement for determining and eliminating a delay introduced into a signal by opto-electrical components.

Technical Background

Optical signals can be used to transmit information between two communication components (transmitter, receiver). Optical signals may also be used to measure a runtime of a signal between a transmitter and a receiver. Such approaches are used, for example, in telemeters. Another use case is Interferometry, a technique that is used to extract information and measure physical parameters based on interference of superimposed electromagnetic waves, in particular optical beams of coherent light, as can be realized by a laser.

For example, an interferometer in accordance with a so-called homodyne approach uses a beam of light from a single coherent source. The beam of light is split into two beams that travel along different optical paths. Typically, an interferometer has two arms which build the optical paths. At some point, the two beams are combined and brought to interference to generate an interference signal. When the length of one of the optical paths varies, the phase information of the interference signal also changes. Therefore, the phase of the interfered signal can be used as an indicator for changes of the length of an optical path with respect to the optical length of the other path. In a so-called heterodyne approach, two beams of light with slightly offset frequencies are superimposed to thereby generate an optical beat node.

For example, interferometry is used to measure distance changes with a very high precision and is able to detect variations in distance with a resolution of Picometers ($1 \times 10^{-12}$ m).

Liang, Yu-Rong, et al., "Experimental scheme and noise analysis of weak-light phase locked loop for large-scale intersatellite laser interferometer", Review of Scientific Instruments, American Institute of Physics, 2 Huntington Quadrangle, Melville, NY 11747, vol. 92, no. 12, 9 December 2021, describes an approach for analysing noise in signal measurements from lasers between distant satellites. This document described different approaches of analysing various sources of noise, including phase noise caused by any components involved in the transmission. For example, it is proposed to make a digital phase measurement instead of an analogue phase measurement in order to achieve higher accuracy. The influence of the components used on the measured phase is described, for example as a result of temperature drift.

Barke, Simon: "Inter-Spacecraft Frequency Distribution", 31 December 2015 relates to gravitational wave detection and deals with sources of interference that influence the measurement of the change in a distance as a result of gravitational waves. Several sources of interference are distinguished: noise in the electrical current of the photodetector, clock noise, noise in the length of the optical path, and noise in the movement of test masses.

Summary

It may be seen as an object to increase the accuracy of phase or time delay measurement with optical detection and eliminate undesired noise in the measurement signal. This object is solved by the subject matter of the independent claims.

An optical interferometer arrangement and a method for operating an optical interferometer arrangement according to the features of the independent claims are provided. Further developments can be derived from the dependent claims and from the following description.

Many of the features described with reference to the optical arrangement may be implemented as method steps, or vice versa. Therefore, the description provided in the context of the optical arrangement applies in an analogous manner also to the method. In particular, the functions of the optical arrangement and of its components may be implemented as method steps of the method and the method steps may be implemented as functions of the optical arrangement.

According to an aspect, an optical arrangement comprises a first optical path for transmitting a first beam, and a detector arrangement for receiving the first beam. The optical arrangement is configured to apply an optical pilot tone with an original phase to the detector arrangement. The detector arrangement is configured to receive the optical pilot tone, to sense the phase of the received optical pilot tone, and to determine a pilot tone delay between the phase of the received optical pilot tone and the original phase of the optical pilot tone. The optical arrangement is configured to determine a delay correction value based on the determined pilot tone delay and to apply the delay correction value to a signal of the first beam containing measurement information received by the detector arrangement. The detector arrangement is configured to sense a phase or time delay of the signal of the first beam.

According to an embodiment, the optical arrangement comprises a second optical path for transmitting a second beam. The detector arrangement is configured and arranged for receiving the second beam and for sensing a beat between the first beam and the second beam. The optical interferometer arrangement is configured to determine a relative length change between a first length of the first optical path and a second length of the second optical path based on a phase of the beat.

In this embodiment, the optical arrangement may be an optical interferometry arrangement. Several embodiments may be described with reference to interferometry. However, it is to be understood that the principle of applying an optical pilot tone and determining a delay introduced by the detector arrangement into the signal of the first beam can be applied to an optical arrangement that is not related to interferometry.

Interferometry implements the principle of superposition to combine or superpose electromagnetic waves in a way that will cause the superposed electromagnetic waves to have some characteristic that is an indicator of the original state of the electromagnetic waves. For example, when two electromagnetic waves with the same frequency are superposed, the resulting intensity pattern is determined by the phase difference between the two electromagnetic waves as follows: electromagnetic waves that are completely in phase (no phase displacement) undergo constructive interference while electromagnetic waves that are out of phase (phase displacement of $\pi$) undergo destructive interference. Electromagnetic waves with a phase displacement different to zero or any integer multiple of $\pi$ have an intermediate intensity pattern, which can be used to determine the relative phase difference between the two electromagnetic waves.

Different interferometry techniques exist. For example, interferometry may be categorized by the type of detection, which can be homodyne or heterodyne. In homodyne detection, the interference occurs between two beams at the same wavelength. The phase difference between the two beams results in a change in the intensity of the superposed electromagnetic wave that is detected by the detector arrangement. The resulting intensity of the light after mixing of these two beams is measured.

The heterodyne technique makes use two electromagnetic waves in the optical range of different optical wavelengths. This can be achieved, for example, by shifting an input electromagnetic wave to another frequency range using optical modulators.

For example, the input electromagnetic wave of frequency f1 is mixed with a reference input electromagnetic wave of frequency f2 which has not passed through the measurement path (LO). The combination of the input electromagnetic wave creates two new frequencies, one at the sum f1 + f2 of the two frequencies, and the other at the difference f1 - f2. These new frequencies are called heterodynes or beat, whereas typically the difference beat is of interest, and the sum beat is outside the measurement bandwidth of the detector.

The beat typically has an intensity proportional to the square-root of the product of the intensities of the input electromagnetic waves. The optical interferometer arrangement described herein may be of the heterodyne category.

For example, the first optical path is the reference path or local path while the second optical path is the sample path or measurement path. When the length of one of these paths (e.g., the measurement path) varies, the phase of the beat varies, and the relative length change can be determined based on the phase information of the beat in accordance with the principles of interferometry.

It was recognized that the detector arrangement may introduce phase noise to the phase of the received signal, and thereby cause measurement errors. These measurement errors particularly have an impact on high precision length measurements, e.g., measurements for detecting gravitational waves. The optical pilot tone has a constant and known phase and is applied to the detector arrangement. Particularly, the optical pilot tone as well as the first and second beams are received by the same detector arrangement. The detector arrangement determines the phase noise introduced into the optical pilot tone by the optical domain and the electrical domain, i.e., by the components configured for sensing the optical pilot tone and determining its phase. Because the original phase of the optical pilot tone is known, the phase noise can be determined as the difference between the determined phase of the received optical pilot tone and the original phase of the optical pilot tone. A phase correction value can be determined based on the phase noise introduced into the optical pilot tone. This phase correction value is applied to a signal retrieved from the first beam and/or to the second beam, thereby eliminating the phase noise introduced by the optical domain and the electrical domain, especially by optical components that are part of the detector arrangement.

For example, the optical pilot tone is a signal with a sinusoidal waveform of constant frequency, wherein the intensity or another suitable property of the electromagnetic wave carrying the optical pilot tone, like for example its polarization, varies in accordance. The optical pilot tone is received by the detector arrangement and the received signal allows the detector arrangement to determine the phase of the optical pilot tone.

This approach increases the accuracy of length measurement with interferometry by eliminating phase noise that is introduced by the optical and/or electrical domain components. For example, phase noise may be introduced in the optical domain by variations of mean intensity of the light incident to the detector, or temperature and bias voltage noise of the detector arrangement.

According to an embodiment, the optical interferometer arrangement further comprises a light source and a beam splitter. The light source is configured to generate and emit at least one coherent light beam towards the beam splitter. The beam splitter is arranged to split the coherent light beam to obtain the first beam and the second beam. An optional optical modulator in either of the two beams or in both beams can be used to provide a heterodyne offset frequency between both beams.

According to another embodiment, the optical interferometer arrangement is configured to vary an intensity of the first beam with a constant frequency.

The optical pilot tone may be generated and transmitted towards the detector arrangement continuously or intermittently. For example, the optical pilot tone may be generated with a known and constant frequency while the optical interferometer arrangement is operated to determine a length variation of the first and/or second optical path.

According to another embodiment, the optical interferometer arrangement is configured to generate the optical pilot tone by using light that does not interfere with the first beam and/or the second beam.

The optical pilot tone may be transmitted by a distinct light beam or by modulating a signal onto one of the beams. When the optical pilot tone is transmitted by a distinct light beam, it needs to be identified by the detector arrangement, i.e., the detector arrangement needs to separate the pilot tone from the beams. In particular, light with a wavelength is used that does not interfere with the first and/or second beam. For example, the wavelength of the optical pilot tone differs from the wavelength of the first and/or second beam so that they do not interfere, and the pilot tone frequency differs from the frequency of the signal retrieved from the first and/or second beam so it can be separated in the electrical domain as well.

According to another embodiment, the optical interferometer arrangement is configured to generate the optical pilot tone by using non-coherent light.

The optical pilot tone may be emitted by a distinct light source that emits non-coherent light. Non-coherent light does not interfere with coherent light that is used for the first and second optical path.

In an alternative embodiment, the optical pilot tone is generated by another light source that emits coherent light that is intensity-modulated with the frequency of the optical pilot tone. However, in this example, the coherent light of the optical pilot tone needs to have a certain wavelength so that the optical pilot tone does not interfere with the light of the first and second optical path.

According to another embodiment, the optical interferometer arrangement is configured to transmit the optical pilot tone via at least a part of one of the first optical path and the second optical path.

In this embodiment, the optical pilot tone is transmitted via at least a part of the first or second optical path and is thereby detected by the detector arrangement. Preferably, the optical pilot tone is transmitted via the reference path or local path.

According to another embodiment, the optical pilot tone is intensity modulated to the first beam or to the second beam.

The first beam or the second beam is varied in its intensity in accordance with the frequency of the optical pilot tone. Therefore, the phase information of the optical pilot tone is transmitted by the intensity modulated first or second beam. The detector arrangement senses the intensity of the first or second beam and is thereby able to determine the phase of the pilot tone in order to identify the difference between the original and known phase of the pilot tone and the sensed phase.

According to another embodiment, the optical arrangement further comprises a signal generator which is configured to operate with a given modulation scheme. The signal generator is configured to control the light source to generate the first beam and/or the second beam. The signal generator is further configured to generate the optical pilot tone which is then applied to the first beam and/or the second beam.

For example, the signal generator generates a control signal (e.g., an electric command signal) which is provided to the light source and controls the light source to generate and emit the first and/or second beams. Furthermore, the same signal generator also generates a control signal for generating the optical pilot tone which is applied to the first beam and/or to the second beam. In other words, a single signal generator is used for generating the first and/or second beam as well as for generating the optical pilot tone. Phase noise introduced by the signal generator thus is also corrected by subtracting the correction value obtained from the pilot tone from the retrieved signal. The single signal generator may also be used to apply the beat to the first and second beams, when the optical arrangement is implemented in an embodiment with first and second beams.

Applying the optical pilot tone to the first and/or second beams may be done by using several techniques. For example, the pilot tone may be applied to the first and/or second beams in respective optical paths by modulating a light source in its intensity based on the control signal for generating the optical pilot tone. Alternatively, the optical pilot tone may be applied to the first and/or second beams by means of an optical modulator located in the respective optical path and controlled based on the control signal for generating the optical pilot tone. Another example for applying the optical pilot tone to the first and/or second beams is to superimpose light from a dedicated further light source with the first and/or second beam, wherein the further light source is controlled based on the control signal for generating the optical pilot tone.

According to another embodiment, the optical arrangement comprises a first photodetector as part of the detector arrangement and additionally a second photodetector, wherein the detector arrangement is arranged to receive the beat and the pilot tone, whereas the second photodetector is arranged to only receive the pilot tone.

The second photodetector is separate from the detector arrangement and does not receive the beat, but only the pilot tone. The second photodetector is not affected by any noise or other effects that affect the first photodetector of the detector arrangement. The pilot tone received by the second photodetector may be used as a reference for determining the phase and/or time delay of the pilot tone received by the first photodetector.

According to another aspect, a method for operating an optical arrangement is provided. The method comprises the steps: applying an optical pilot tone with an original phase to a detector arrangement of the optical arrangement; receiving the optical pilot tone by the detector arrangement; sensing a phase of the received optical pilot tone; determining a pilot tone delay between the phase of the received optical pilot tone and the original phase of the optical pilot tone; determining a delay correction value based on the determined pilot tone delay; and applying the delay correction value to a signal of a first beam containing measurement information received by the detector arrangement, wherein the detector arrangement is configured to sense a phase or time delay of the first beam.

This method may be implemented to measure the phase delay of an intensity modulated beam (telemeters). Alternatively, it may be implemented in optical clocks, time of flight sensors, and other optical devices that are based on time delay or phase delay of an optical signal.

By identifying the (time or phase) delay of a detector arrangement with an optical pilot tone, a correction value can be determined and applied to a measurement signal to reduce errors of phase or delay measurement with optical detection instruments (i.e., the detector arrangement).

Generally speaking, the method may be summed up as follows: a signal of interest may experience an undesired (phase or time) delay in an optical detector arrangement. For example, the optical detector arrangement may include an optical detector chain that includes an opto-electrical converter and consecutive electrical conditioning. The opto-electrical converter and/or the electrical conditioning may contribute to the delay in the measured signal. To identify and eliminate this effect from the measured signal, an optical signal like the pilot tone with a known shape and phase is applied, from which phase information can be obtained after passing through the optical detector arrangement. As the first signal experiences similar retardations like the optical pilot tone, the reconstructed phase from the optical pilot tone indicates the influence of the detector arrangement onto the original phase thereof. This phase information can be used to eliminate phase noise from the acquired first signal.

For example, the optical pilot tone may be a sinusoidal signal. The original phase of the optical pilot tone may have a constant phase. The method may use the time delay or phase delay experienced by the optical pilot tone when passing the detector arrangement. The delay correction value may be an additive value. The signal of the first beam may include phase information to which a phase correction value is applied.

In one embodiment, the method is a method for operating an optical interferometer arrangement. According to this embodiment, the method comprises the steps: applying an optical pilot tone with an original phase to a detector arrangement of the optical interferometer arrangement; receiving the optical pilot tone by the detector arrangement; sensing a phase of the received optical pilot tone; determining a pilot tone delay between the phase of the received optical pilot tone and the original phase of the optical pilot tone; determining a delay correction value based on the determined pilot tone delay; and applying the delay correction value to a signal of a first beam containing measurement information received by the detector arrangement, wherein the detector arrangement is configured to sense a phase or time delay of the first beam.

With respect to the details of the method of this example, reference is made to the description of the functions of the optical interferometer arrangement, which applies to the method.

According to an embodiment, the method comprises varying an intensity of the first or second beam with a constant frequency. In this embodiment, the intensity of the carrier signal, i.e., of the first or second beam, is varied which corresponds to applying a intensity modulation to the first/second beam so that the optical pilot tone is modulated onto the first/second beam.

According to another embodiment, the method comprises generating the optical pilot tone by using an additional light source that does not interfere with the first beam.

According to another embodiment, the method comprises generating the optical pilot tone by using an additional non-coherent light source.

According to another embodiment, the signal of the first beam includes phase information of the first beam, and the delay correction value is a phase correction value that is applied to the phase information of the signal of the first beam.

Brief description of the drawings

The subject matter will hereinafter be described in conjunction with the following drawing figures, wherein like numerals denote like elements, and wherein:

Fig. 1 is a schematic representation of the principle of interferometry;

Fig. 2 is a schematic representation of an optical path for transmitting an optical signal and applying an optical pilot tone;

Fig. 3 is a schematic representation of a heterodyne interferometer;

Fig. 4 is a schematic representation of the method steps of a method for operating an optical interferometer arrangement;

Fig. 5 is a schematic representation of an optical arrangement.

Detailed description of the drawings

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

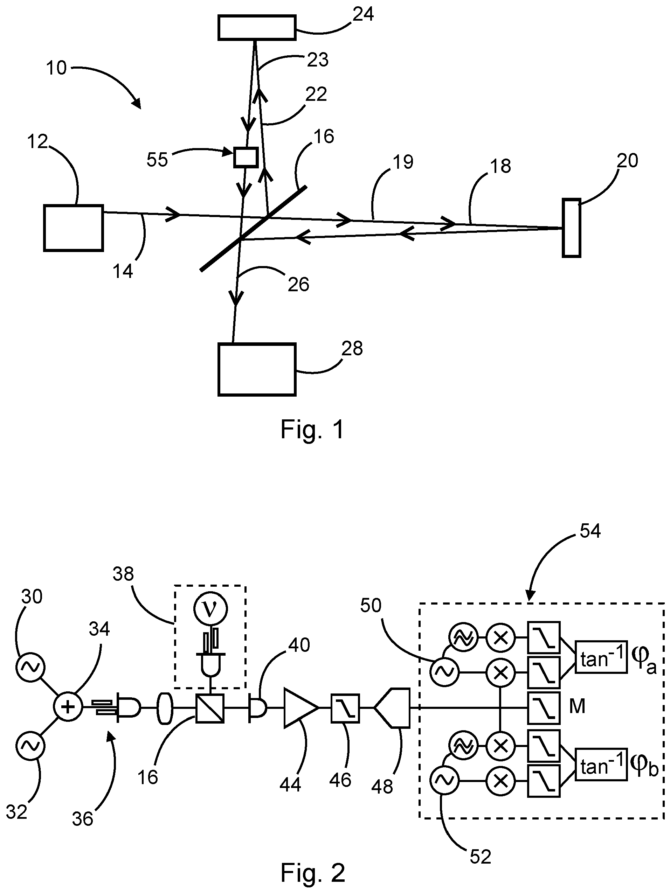

Fig. 1 schematically shows the principle of interferometry with reference to the interferometer 10. The interferometer 10 comprises a light source 12 that emits a coherent light beam 14. The coherent light beam 14 is split by the beam splitter 16 into a first beam 19 and a second beam 23. The first beam 19 follows the first optical path 18 towards a first mirror 20 and is reflected by the first mirror 20 back to the beam splitter 16. The second beam 23 follows the second optical path 22 towards a second mirror 24 and is reflected by the second mirror 24 through an optical modulator 55 back to the beam splitter 16. The reflected beams are superposed and result in the interfered light beam 26. The detector arrangement 28 senses the interfered light beam 26 and is able to determine properties of the interfered light beam 26.

The first optical path 18 and the second optical path 22 may be referred to as arms of the interferometer. When the length of one of these arms varies, the interfered light beam 26 also changes in its properties, e.g., the phase of the interfered light beam 26 changes, thereby indicating the varied length of the arms of the interferometer.

The detector arrangement 28 may include one or more photodetectors. It was recognized that the phase readout of optical photodetectors can be affected by intensity, reverse bias and temperature through different principles of operation. To quantify and compensate these effects, an approach is described herein, where a local optical pilot tone is added to separate the measurement from readout noise to provide a more performant and intensity invariant length metrology.

In the following, the operation principle of the optical interferometer arrangement is exemplarily described with reference to a heterodyne interferometer. In heterodyne optical length metrology, two coherent laser beams of two frequencies, separated by the beat frequency ($f$1 - $f$2), are superimposed and brought to interference. The optical beat, a sinusoidal signal, is converted to a photo-current on a photoelectric device, for instance a photodiode. The electrical signal is then conditioned, and its phase is determined. The measured phase $\varphi$ can then be converted to an optical pathlength (OPL) relative to the wavelength of light $\lambda$ through the correlation

$$OPL = \frac{\lambda}{2 \cdot 2\pi} \varphi$$

for a double-pass Mach-Zehnder interferometer. The requirement for picometer metrology corresponds to phase determination error just ppm of a period for light in the NIR spectrum. However, typical phase noise curves for length metrology expose a 1/f behavior for frequencies below 10 MHz, impeding accurate long-term measurements. Therefore, setups for picometer stable metrology often comprise mechanisms to elaborate stabilization of light intensities, temperature, and phase to reduce the noise. However not all measurement setups can provide stable intensities during the measurement period, for instance caused by changes in reflectivity, polarization losses in the measurement path, or parasitic interferometers.

Therefore, an approach that allows characterization and subtraction of these errors is described herein. A precision phase readout is key to sub-nanometer metrology, and to enable accurate measurement of distance and/or distance changes, as used, for example, in space-based detection of gravitational waves.

It was recognized that several contributors exist that couple into phase through intensity and temperature originating in the read-out chain, such as photodiode induced phase delays by p-n-junction field velocity, electrical phase shift caused by low pass filters, analog-to-digital-converter (ADC) phase shifts, and slew rate limitations of operational amplifiers.

The photodiode transfer function is influenced by the propagation velocity of the diode's substrate, that depends on the electrical field present. The electrical field can be influenced directly by changes in the p-n-junction bias voltage or photocurrent. Typically, the relation is nonlinear and can expose a working point between bias and photocurrent that is insensitive to minor variations. Hence, one possibility to reduce phase shifts is selecting a working point that is insensitive to minor intensity variations. Additionally, the aforementioned equilibrium can be susceptible to temperature through changes of the quantum efficiency of the photosensor. A second type of coupling of temperature into phase may occur through variations in the dark current, which typically increases logarithmically over temperature. These two latter effects also effectively limit the performance a photodiode based intensity stabilization can achieve, effectively causing out-of-loop intensity noise.

Electrical phase shifts can further be introduced by a low-pass filter that is typically implemented before ADC conversion to accommodate only the first Nyquist zone. Such filters are typically implemented as resistor-capacitor filter circuits. The phase shift that a frequency $f$ is subjected to in a first order filter is given as:

$$\varphi = tan^{-1}(2\pi \cdot R \cdot C \cdot f) \qquad (1)$$

Both components will expose a thermal coefficient of several ppm/K for real parts, e.g., temperature compensated ceramic capacitors (NP0/C0G) still exhibit a typical tolerance of $0\pm30$ ppm/K.

The operational amplifiers typically used to condition the photodiode's electrical signal and drive the analog-to-digital converters may also introduce phase shifts when their slew rate limit $\hat{V}_{lim}$ is exceeded with the amplitude output of the signal $\tilde{V}$.

$$\hat{V}_{lim} = 2\pi \cdot f \cdot \tilde{V} \qquad (2)$$

Furthermore, ADC phase shifts have been observed, caused by changes in the DC-offset.

However, in one example, the approach described herein may contribute to identifying and eliminating phase shifts that are introduced in the optical and/or electrical domain, in particular by the components that sense and detect the optical signals.

Fig. 2 schematically shows a setup for demonstrating how an optical pilot tone is applied in the optical domain to identify and characterize phase noise that is introduced to an optical signal by the optical and/or electrical domain.

In one example, the setup comprises a first light source 36 (e.g., a LED) and a second light source 38 (e.g., a LED), of which the first light source 36 is driven directly by an AC signal generator that provides a waveform for amplitude modulations at frequencies 30 and 32. Two electrical signals 30, 32 are electrically combined in a combiner 34 and applied to the first light source 36. The second LED 38 is used to vary the mean intensity. Both beams emitted from the light sources 36, 38 are combined by a beam splitter 16, before they are detected in a photodiode 40 (which is part of or corresponds to the detector arrangement 28 as shown in Fig. 1).The photocurrent of the photodetector 40 is amplified by a transimpedance amplifier 44, filtered by a low-pass filter 46, converted by an analog-to-digital converter 48 in differential mode, and then read into phase demodulators 54 (e.g., implemented in a field programmable gate array, FPGA) to perform IQ demodulation at both frequencies by multiplication with a digital reference sine and cosine followed by a digital $4^{th}$ order low pass filter. The phase demodulators 54 operate on a frequency 50 of the first electrical signal and the frequency 52 of the second electrical signal.

The second light source 38 is used to vary the intensity of the light received by the photodetector 40. It can be observed that the varying intensity has an impact on the phase of the modulated light beam emitted by the first light source 36 as detected by the photodetector 40. Bias and intensity variation of the light beam at the photodetectors may contribute to phase shift as detected by the photodetectors.

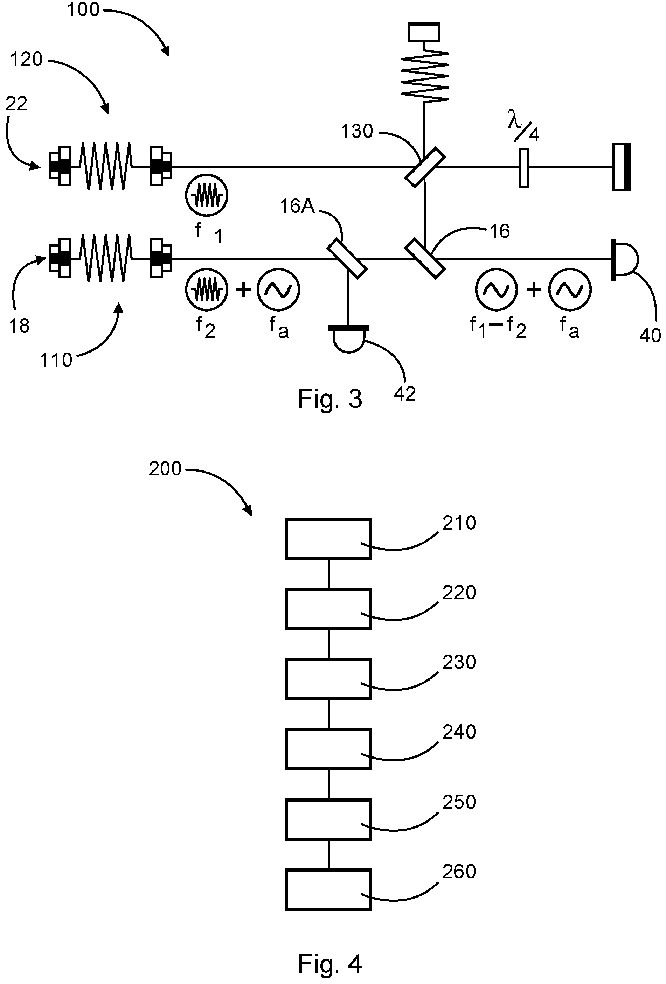

Fig. 3 schematically shows a heterodyne interferometer which implements functions for phase noise elimination in accordance with the principles described herein.

Fig. 3 shows an optical interferometer arrangement 100, with spatially separated beams along optical paths 18, 22 and polarization routing in the primary measurement path 22. Optical signals are fed into the first and second optical paths by a first signal feeder 110 and a second signal feeder 120, respectively. The first signal feeder 110 feeds an optical signal with the frequency $f_2$ into the local path and applies a pilot tone with the frequency $f_a$ to the signal of the local path. In the optical paths 18, 22, the pilot tone may be modulated onto a respective light beam either directly (e.g., as shown in Fig. 2 by modulating a light source) or by means of an optical modulator which is located in the respective optical path or by superimposing light from a dedicated further light source with the first and/or second beam. The second signal feeder 120 feeds an optical signal with the frequency $f_1$ into the measurement path. Polarizing beam splitters like the one generally indicated by reference numeral 130 and other beam splitters 16 reflect and guide the optical signals through the heterodyne interferometer 100 in accordance with the principles of interferometry. The optical pilot tone has a known phase that is constant throughout the interferometer arrangement 100. Phase noise introduced by the optical or electrical domain can be identified as the difference between the known phase and the sensed phase of the optical pilot tone.

Generally speaking, a method and an optical interferometer arrangement 100 for characterizing and eliminating phase shifts introduced by the optical readout chain are proposed. In the example of Fig. 3, an additional intensity modulated optical pilot tone signal is modulated onto the photodiode 40 of the detector arrangement and the second photodiode 42 to correct phase delays introduced by the optical and electrical domain into the signals used for interferometry measurement. The approach is based on the premise that two closely related beat and pilot frequencies will experience similar phase delays in the photodiode 40 of the detector arrangement and readout.

For different sources of variation, the pilot tone undergoes the same phase shift as the original measurement signal. This particularly applies when the optical interferometer arrangement is exposed to variations in intensity, or variations of temperature of the photodiode 40.

In one example, the optical pilot tone emitted via either of the two optical paths 18, 22 is generated from the same signal generator as used in the heterodyne interferometer 100. Using a second photodetector 42 which only receives the pilot tone allows to effectively cancel out signal generator noise contributions as well. The second photodetector 42 receives the pilot tone from the beam splitter 16A.

The correction scheme also allows for detection of phase offset differences within quadrant photodiodes (QPDs). For example, a quadrant-to-quadrant phase difference of $\approx240$ $\mu$rad observed for an exemplary setup of the interferometer as shown in Fig. 3 would imply an angular offset of 80 nrad (assuming a center wavelength of lambda = 1064 nm and a quadrant separation of 1 mm in one example) when evaluated as a differential wavefront sensor (DWS).

If the beat measurement was previously already limited by the quantization noise, the white noise is slightly increased with this method, as the beat amplitude for each superimposed beat can only be half of the full scale. This can be compensated by increasing the total dynamic range of the measurement, e.g., higher ADC bitrate, oversampling, and driving the ADC input to full scale.

For this characterization, exemplary amplitude modulations at frequencies $fa$ =12.5 kHz (divider 800) and $fb \approx$ 12.690 kHz (divider 788) are chosen as derivates from 10 MHz reference clock that is used to synchronize signal generators and FPGA, and such that no phase cross talk is observed between both phase signals. When the signal generator precision is limited, a post-correction of linear trend may be applied to compensate for the remainder of the rational fraction of $fb$.

With further reference to Fig. 3, the phase noise elimination based on an optical pilot tone applied to a heterodyne interferometer is described in greater detail for a certain exemplary implementation.

A correction based on a locally generated pilot tone can be implemented by intensity modulating one of the beams of the first optical path 18 (local path) or the second optical path 22 (measurement path) of the interferometer 100. Fig. 3 schematically shows a typical Mach-Zehnder interferometer where the optical beam of the first optical path 18 (local path) is superimposed with a pilot tone $f_a$. The two laser beams with frequencies $f_1$ and $f_2$ are brought into interference to generate a beat $(f_1 - f_2)$ that is detected by the first photodetector 40, together with the pilot tone. The pilot tone alone is also detected by the second photodetector 42. When the heterodyne frequencies and the pilot tone $f_a$ are derived from the same clock source, a pilot tone based correction can compensate most phase noise present in the system including electrical clock phase noise. The pilot tone can be introduced by intensity modulation of one of the beams of the first or second optical paths 18, 22 when optical modulators (AOM) are used to generate heterodyne optical frequencies, or alternatively through an additional light source (see light source 38 in Fig. 2). The light source may be laser sources that operate at $\lambda$ =1064 nm.

In this example, the difference between both pilot tones has a significantly lower error contribution. As a single pilot tone detection itself can contain phase noise (e.g., from the signal generators, or the process of signal generation), a second or more pilot tone detections may be used to establish the original pilot tone phase. This may be done using the second photodiode 42. Subtracting this measured pilot phase yields increased stabilities over an uncorrected measurement.

Fig. 4 schematically shows a method 200 for operating an optical interferometer arrangement as described in Fig. 3. The method 200 comprising the steps: applying an optical pilot tone with a known original phase to a detector arrangement of the optical interferometer arrangement in step 210; receiving the optical pilot tone by the detector arrangement in step 220; sensing a phase of the received optical pilot tone in step 230; determining a pilot tone phase difference between the phase of the received optical pilot tone and the original phase of the optical pilot tone in step 240; determining a phase correction value based on the determined pilot tone phase difference in step 250; and applying the phase correction value to a signal that corresponds to the first beam and/or a second beam received by the detector arrangement in step 260.

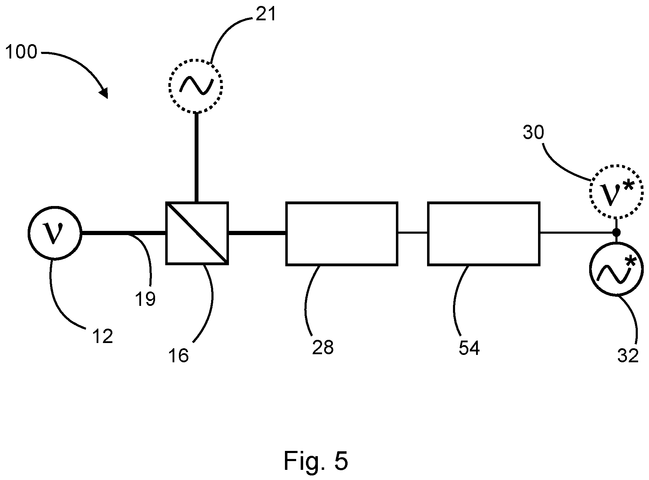

Fig. 5 shows an optical arrangement 100. With reference to Fig. 5, the general principle of an optical arrangement 100 for compensating a delay experienced by an acquired signal is described.

An optical signal emitted by the light source 12 may experience an undesired varying time delay in the optical and/or electrical detection chain. The optical and/or electrical detection chain comprises a detector arrangement 28 and an in-phase quadrature demodulator 54. The detector arrangement 28 and the in-phase quadrature demodulator 54 may both contribute to the delay experienced by the first electrical signal 30 output by the optical and/or electrical detection chain.

To identify and compensate said delay, an optical pilot tone 21 of known shape and phase is modulated onto the optical signal emitted by the light source 12. The optical pilot tone 21 and the signal from the light source 12 are combined in the beam splitter 16. Phase information can be obtained from the optical pilot tone after passing through the optical and/or electrical detection chain. The optical pilot tone and the optical signal emitted by the light source 12 both experience similar retardations. Therefore, the reconstructed phase from the optical pilot tone indicates the varying phase information during transit through the detection path (i.e., the detector arrangement 28 and the in-phase quadrature demodulator 54. This phase information or the delay experienced by the optical pilot tone can be used to characterize or subtract phase noise from the acquired signal 30 for improved performance.

By applying this approach, errors of phase or delay measurement with optical detection are reduced and undesired noise in the measurement signal is mitigated.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

List of reference signs

| | |
|---|---|
| 10 | interferometer |
| 12 | light source |
| 14 | coherent light beam |
| 16 | beam splitter |
| 18 | first optical path |
| 19 | first beam |
| 20 | first mirror |
| 21 | optical pilot tone |
| 22 | second optical path |
| 23 | second beam |
| 24 | second mirror |
| 26 | interfered light beam |
| 28 | detector arrangement |
| 30 | first electrical signal |
| 32 | second electrical signal |
| 34 | combiner |
| 36 | light source, LED |
| 38 | second light source |
| 40 | first photodetector |
| 42 | second photodetector |
| 44 | transimpedance amplifier |
| 46 | low-pass filter |
| 48 | analog-digital-converter, ADC |
| 50 | frequency of first electrical signal |
| 52 | frequency of second electrical signal |
| 54 | in-phase quadrature demodulator |
| 55 | optical modulator |
| 100 | optical arrangement |
| 110 | first signal feeder |
| 120 | second signal feeder |
| 130 | polarizing beam splitter |
| 200 | method |

**Claims**

1. An optical arrangement (100), comprising:

   a first optical path (18) for transmitting a first beam (19);

   a detector arrangement (28) for receiving the first beam (19);
   wherein the optical arrangement (100) is configured to apply an optical pilot tone with an original phase to the detector arrangement (28);
   wherein the detector arrangement (28) is configured to receive the optical pilot tone, to sense the phase of the received optical pilot tone, and to determine a pilot tone delay between the phase of the received optical pilot tone and the original phase of the optical pilot tone;
   wherein the optical arrangement (100) is configured to determine a delay correction value based on the determined pilot tone delay and to apply the delay correction value to a signal of the first beam (19) containing measurement information received by the detector arrangement (28);
   wherein the detector arrangement is configured to sense a phase or time delay of the signal of the first beam (19).

2. The optical arrangement (100) of claim 1, comprising:

   a second optical path (22) for transmitting a second beam (23);
   wherein the detector arrangement (28) is configured for receiving the second beam (23) and for sensing a beat between the first beam (19) and the second beam (23);
   wherein the optical arrangement (100) is configured to determine a relative length change between a first length of the first optical path (18) and a second length of the second optical path (22) based on a phase of the beat.

3. The optical arrangement (100) of claim 2,

   further comprising a light source (12) and a beam splitter (16);
   wherein the light source (12) is configured to generate and emit at least one coherent light beam (14) towards the beam splitter (16);
   wherein the beam splitter (16) is arranged to split the coherent light beam (14) to obtain the first beam (19) and the second beam (23).

4. The optical arrangement (100) of any one of the preceding claims,
   configured to generate the optical pilot tone by using light that does not interfere with the first beam.

5. The optical arrangement (100) of any one of the preceding claims,
   configured to generate the optical pilot tone by using non-coherent light.

6. The optical arrangement (100) of any one of the preceding claims, configured to transmit the optical pilot tone via at least a part of the first optical path (18).

7. The optical arrangement (100) of claim 6, wherein the optical pilot tone is intensity modulated to the first beam (19).

8. The optical arrangement (100) of any one of claims 3 to 7,

   further comprising a signal generator which is configured to operate with a given modulation scheme; wherein the signal generator is configured to control the light source (12) to generate the first beam (19) and/or to the second beam (23) and to generate the optical pilot tone which is applied to the first beam (19) and/or the second beam (23).

9. The optical arrangement (100) of one of the claims 2 to 8,

   wherein the optical arrangement (100) comprises a first photodetector (40) as part of the detector arrangement (28) and a second photodetector (42); wherein the first photodetector (40) is arranged to receive the beat and the pilot tone and the second photodetector (42) is arranged to only receive the pilot tone.

10. A method for operating an optical arrangement (100), comprising the steps:

    applying an optical pilot tone with an original phase to a detector arrangement (28) of the optical arrangement (100); receiving the optical pilot tone by the detector arrangement (28); sensing a phase of the received optical pilot tone; determining a pilot tone delay between the phase of the received optical pilot tone and the original phase of the optical pilot tone; determining a delay correction value based on the determined pilot tone delay; and applying the delay correction value to a signal of a first beam (19) containing measurement information received by the detector arrangement (28), wherein the detector arrangement (28) is configured to sense a phase or time delay of the first beam (19).

11. The method of claim 10, further comprising varying an intensity of the first beam (19) with a constant frequency.

12. The method of claim 10 or 11, wherein the optical pilot tone is intensity modulated onto the first beam (19).

13. The method of any one of the claims 10 to 12, comprising generating the optical pilot tone by using light that does not interfere with the first beam.

14. The method of any one of the claims 10 to 13, comprising generating the optical pilot tone by using non-coherent light.

15. The method of any one of the claims 10 to 13, wherein the signal of the first beam (19) includes phase information of the first beam (19), and wherein the delay correction value is a phase correction value that is applied to the phase information of the signal of the first beam (19).

**Patentansprüche**

1. Optische Anordnung (100), umfassend:

   einen ersten optischen Pfad (18) zum Übertragen eines ersten Strahls (19); eine Detektoranordnung (28) zum Empfangen des ersten Strahls (19); wobei die optische Anordnung (100) konfiguriert ist zum Anwenden eines optischen Pilottons mit einer ursprünglichen Phase auf die Detektoranordnung (28); wobei die Detektoranordnung (28) konfiguriert ist zum Empfangen des optischen Pilottons, um die Phase des empfangenen optischen Pilottons zu erfassen und um eine Pilottonverzögerung zwischen der Phase des empfangenen optischen Pilottons und der ursprünglichen Phase des optischen Pilottons zu ermitteln; wobei die optische Anordnung (100) konfiguriert ist zum Ermitteln eines Verzögerungskorrekturwerts basierend auf der ermittelten Pilottonverzögerung und zum Anwenden des Verzögerungskorrekturwerts auf ein Signal des ersten Strahls (19), das Messinformationen enthält, die in der Detektoranordnung (28) empfangen werden; wobei die Detektoranordnung konfiguriert ist zum Erfassen einer Phasen- oder Zeitverzögerung des Signals des ersten Strahls (19).

2. Optische Anordnung (100) nach Anspruch 1, umfassend:

   einen zweiten optischen Pfad (22) zum Übertragen eines zweiten Strahls (23);

wobei die Detektoranordnung (28) konfiguriert ist zum Empfangen des zweiten Strahls (23) und zum Erfassen einer Schwebung zwischen dem ersten Strahl (19) und dem zweiten Strahl (23); wobei die optische Anordnung (100) konfiguriert ist zum Ermitteln einer relativen Längenänderung zwischen einer ersten Länge des ersten optischen Pfades (18) und einer zweiten Länge des zweiten optischen Pfades (22) basierend auf einer Phase der Schwebung.

3. Optische Anordnung (100) nach Anspruch 2,

die ferner eine Lichtquelle (12) und einen Strahlteiler (16) umfasst; wobei die Lichtquelle (12) konfiguriert ist zum Erzeugen und Abstrahlen mindestens eines kohärenten Lichtstrahls (14) in Richtung auf den Strahlteiler (16); wobei der Strahlteiler (16) geeignet ist zum Teilen des kohärenten Lichtstrahls (14), um den ersten Strahl (19) und den zweiten Strahl (23) zu erhalten.

4. Optische Anordnung (100) nach einem der vorhergehenden Ansprüche, die konfiguriert ist zum Erzeugen des optischen Pilottons, indem Licht verwendet wird, das nicht mit dem ersten Strahl interferiert.

5. Optische Anordnung (100) nach einem der vorhergehenden Ansprüche, die konfiguriert ist zum Erzeugen des optischen Pilottons, indem nicht-kohärentes Licht verwendet wird.

6. Optische Anordnung (100) nach einem der vorhergehenden Ansprüche, die konfiguriert ist zum Übertragen des optischen Pilottons über mindestens einen Teil des ersten optischen Pfades (18).

7. Optische Anordnung (100) nach Anspruch 6, wobei der optische Pilotton auf den ersten Strahl (19) intensitätsmoduliert ist.

8. Optische Anordnung (100) nach einem der Ansprüche 3 bis 7,

die ferner einen Signalgenerator umfasst, der konfiguriert ist, um mit einem gegebenen Modulationsschema betrieben zu werden; wobei der Signalgenerator konfiguriert ist zum Steuern der Lichtquelle (12), um den ersten Strahl (19) und/oder den zweiten Strahl (23) zu erzeugen und um den optischen Pilotton zu erzeugen, der auf den ersten Strahl (19) und/oder den zweiten Strahl (23) angewandt wird.

9. Optische Anordnung (100) nach einem der Ansprüche 2 bis 8,

wobei die optische Anordnung (100) einen ersten Fotodetektor (40) als Teil der Detektoranordnung (28) und einen zweiten Fotodetektor (42) umfasst; wobei der erste Fotodetektor (40) geeignet ist, um die Schwebung und den Pilotton zu empfangen, und wobei der zweite Fotodetektor (42) geeignet ist, um nur den Pilotton zu empfangen.

10. Verfahren zum Betreiben einer optischen Anordnung (100), das die folgenden Schritte umfasst:

Anwenden eines optischen Pilottons mit einer ursprünglichen Phase auf eine Detektoranordnung (28) der optischen Anordnung (100); Empfangen des optischen Pilottons in der Detektoranordnung (28); Erfassen einer Phase des empfangenen optischen Pilottons; Ermitteln einer Pilottonverzögerung zwischen der Phase des empfangenen optischen Pilottons und der ursprünglichen Phase des optischen Pilottons; Ermitteln eines Verzögerungskorrekturwerts basierend auf der ermittelten Pilottonverzögerung; und Anwenden des Verzögerungskorrekturwerts auf ein Signal eines ersten Strahls (19), das Messinformationen enthält, die in der Detektoranordnung (28) empfangen werden, wobei die Detektoranordnung (28) konfiguriert ist zum Erfassen einer Phasen- oder Zeitverzögerung des ersten Strahls (19).

11. Verfahren nach Anspruch 10, das ferner ein Variieren einer Intensität des ersten Strahls (19) bei einer konstanten Frequenz umfasst.

12. Verfahren nach Anspruch 10 oder 11, wobei der optische Pilotton auf den ersten Strahl (19) intensitätsmoduliert ist.

13. Verfahren nach einem der Ansprüche 10 bis 12, das ein Erzeugen des optischen Pilottons umfasst, indem Licht verwendet wird, das nicht mit dem ersten Strahl interferiert.

14. Verfahren nach einem der Ansprüche 10 bis 13, das ein Erzeugen des optischen Pilottons umfasst, indem ein nicht-kohärentes Licht verwendet wird.

15. Verfahren nach einem der Ansprüche 10 bis 13, wobei das Signal des ersten Strahls (19) Phaseninformationen des ersten Strahls (19) beinhaltet und wobei der Verzögerungskorrekturwert ein Phasenkorrekturwert ist, der auf die Phaseninformationen des Signals des ersten Strahls (19) angewandt wird.

## Revendications

1. Agencement optique (100), comprenant :

   un premier chemin optique (18) pour transmettre un premier faisceau (19) ;
   un agencement de détecteur (28) pour recevoir le premier faisceau (19) ;
   l'agencement optique (100) étant configuré pour appliquer une tonalité pilote optique avec une phase d'origine à l'agencement de détecteur (28) ;
   l'agencement de détecteur (28) étant configuré pour recevoir la tonalité pilote optique, afin de détecter la phase de la tonalité pilote optique reçue, et afin de déterminer un retard de tonalité pilote entre la phase de la tonalité pilote optique reçue et la phase d'origine de la tonalité pilote optique ;
   l'agencement optique (100) étant configuré pour déterminer une valeur de correction de retard basée sur le retard de tonalité pilote déterminé et pour appliquer la valeur de correction de retard à un signal du premier faisceau (19) contenant des informations de mesure reçues par l'agencement de détecteur (28) ;
   l'agencement de détecteur étant configuré pour détecter une phase ou un retard temporel du signal du premier faisceau (19).

2. Agencement optique (100) selon la revendication 1, comprenant :

   un second chemin optique (22) pour transmettre un second faisceau (23) ;
   l'agencement de détecteur (28) étant configuré pour recevoir le second faisceau (23) et pour détecter un battement entre le premier faisceau (19) et le second faisceau (23) ;
   l'agencement optique (100) étant configuré pour déterminer un changement de longueur relatif entre une première longueur du premier chemin optique (18) et une seconde longueur du second chemin optique (22) sur la base d'une phase du battement.

3. Agencement optique (100) selon la revendication 2,

   comprenant en outre une source de lumière (12) et un diviseur de faisceau (16) ;
   la source de lumière (12) étant configurée pour générer et émettre au moins un faisceau de lumière cohérent (14) vers le diviseur de faisceau (16) ;
   le diviseur de faisceau (16) étant agencé pour diviser le faisceau de lumière cohérent (14) afin d'obtenir le premier faisceau (19) et le second faisceau (23).

4. Agencement optique (100) selon l'une quelconque des revendications précédentes,
   configuré pour générer la tonalité pilote optique en utilisant une lumière qui n'interfère pas avec le premier faisceau.

5. Agencement optique (100) selon l'une quelconque des revendications précédentes,
   configuré pour générer la tonalité pilote optique en utilisant une lumière non cohérente.

6. Agencement optique (100) selon l'une quelconque des revendications précédentes,
   configuré pour transmettre la tonalité pilote optique par l'intermédiaire d'au moins une partie du premier chemin optique (18).

7. Agencement optique (100) selon la revendication 6, la tonalité pilote optique étant modulée en intensité sur le premier faisceau (19).

8. Agencement optique (100) selon l'une quelconque des revendications 3 à 7,

   comprenant en outre un générateur de signaux qui est configuré pour fonctionner avec un schéma de modulation donné ;
   le générateur de signaux étant configuré pour commander la source de lumière (12) afin de générer le premier faisceau (19) et/ou le second faisceau (23) et afin de générer la tonalité pilote optique qui est appliquée au premier faisceau (19) et/ou au second faisceau (23).

9. Agencement optique (100) selon l'une des revendications 2 à 8,

   l'agencement optique (100) comprenant un premier photodétecteur (40) faisant partie de l'agencement de détecteur (28) et un second photodétecteur (42) ;
   le premier photodétecteur (40) étant agencé pour recevoir le battement et la tonalité pilote et le second photodétecteur (42) étant agencé pour ne recevoir que la tonalité pilote.

10. Procédé de fonctionnement d'un agencement optique (100), comprenant les étapes de :

    l'application d'une tonalité pilote optique avec une phase d'origine à un agencement de détecteur (28) de l'agencement optique (100) ; la réception de la tonalité pilote optique par l'agencement de détecteur (28) ; la détection d'une phase de la tonalité pilote optique reue ; la détermination d'un retard de tonalité pilote entre la phase de la tonalité pilote optique reçue et la phase d'origine de la tonalité pilote optique ; la détermination d'une valeur de correction de retard basée sur le retard de tonalité pilote déterminé ; et l'application de la valeur de correction de retard à un signal d'un premier faisceau (19) contenant des informations de mesure reçues par l'agencement de détecteur (28), l'agencement de détecteur (28) étant configuré pour détecter une phase ou un retard temporel du premier faisceau (19).

11. Procédé selon la revendication 10, comprenant en outre la variation d'une intensité du premier faisceau (19) avec une fréquence constante.

12. Procédé selon la revendication 10 ou 11, la tonalité pilote optique étant modulée en intensité sur le premier faisceau (19).

13. Procédé selon l'une quelconque des revendications 10 à 12, comprenant la génération de la tonalité pilote optique en utilisant une lumière qui n'interfère pas avec le premier faisceau.

14. Procédé selon l'une quelconque des revendications 10 à 13, comprenant la génération de la tonalité pilote optique en utilisant une lumière non cohérente.

15. Procédé selon l'une quelconque des revendications 10 à 13, le signal du premier faisceau (19) incluant des informations de phase du premier faisceau (19), et la valeur de correction de retard étant une valeur de correction de phase qui est appliquée aux informations de phase du signal du premier faisceau (19).

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Experimental scheme and noise analysis of weak-light phase locked loop for large-scale intersatellite laser interferometer. **LIANG, YU-RONG et al.** Review of Scientific Instruments. American Institute of Physics, 09 December 2021, vol. 92

- **BARKE, SIMON**. *Inter-Spacecraft Frequency Distribution*, 31 December 2015